# EUROPÄISCHE PATENTANMELDUNG

(11) **EP 2 975 334 A1**
(43) Veröffentlichungstag der Anmeldung: **20.01.2016**
(21) Anmeldenummer: 14177315.0
(22) Anmeldetag: 16.07.2014
(51) Int. Cl.: F24J 2/52

(54) **Aufstellsystem zur schrägen Aufstellung eines tafelförmigen Solarmodules auf einen Untergrund sowie ein tafelförmiges Solarmodul mit einem Aufstellsystem zur schrägen Aufstellung des Solarmodules auf einem Untergrund**

(71) Anmelder: Hafenbahn GmbH & Co. KG, 48431 Rheine (DE)
(72) Erfinder: Brinkmann, Manfred, 48431 Rheine (DE); Haase, Peer, 48429 Rheine (DE)
(74) Vertreter: Berkenbrink, Kai-Oliver

(57) **Zusammenfassung**

Die Erfindung betrifft ein Aufstellsystem zur schrägen Aufstellung eines tafelförmigen Solarmodules auf einen Untergrund sowie ein tafelförmiges Solarmodul mit einem Aufstellsystem zur schrägen Aufstellung des Solarmodules auf einem Untergrund.

## Beschreibung

Die Erfindung betrifft ein Aufstellsystem zur schrägen Aufstellung eines tafelförmigen Solarmodules auf einen Untergrund sowie ein tafelförmiges Solarmodul mit einem Aufstellsystem zur schrägen Aufstellung des Solarmodules auf einem Untergrund.

Solarmodule weisen in der Regel eine tafelförmige Grundform mit einer rechteckigen, von vier Außenkanten gebildeten Außenkontur auf. Die vier Außenkanten eines Solarmodules sind üblicherweise durch einen Metallrahmen gebildet, der einen Träger mit daran angeordneten Photovoltaikelementen oder Sonnenkollektoren umfasst. Durch Photovoltaikelemente kann das Licht der Sonne in elektrische Energie umgewandelt werden, während Sonnenkollektoren zur Sammlung der im Sonnenlicht enthaltenen Wärmeenergie dienen. Ein Solarmodul, bei dem der Rahmen Photovoltaikelemente umfasst, wird auch als Photovoltaikmodul bezeichnet, während ein Solarmodul, dessen Rahmen Sonnenkollektoren umfasst, auch als Solarkollektor bezeichnet wird.

Um das Licht der Sonne optimal nutzen zu können, werden Solarmodule in der Regel schräg zum Untergrund aufgestellt, so dass das Sonnenlicht in einem möglichst steilen Winkel auf das Solarmodul fällt. Zur schrägen Aufstellung von Solarmodulen auf einem Untergrund sind sogenannte Solaraufsteller bekannt. Solche Solaraufsteller umfassen in der Regel Haltemittel, an denen das Solarmodul befestigbar ist, und ein auf den Untergrund auflegbares Rahmenteil, an dem die Haltemittel befestigt sind. Die Haltemittel sind dabei derart zum Rahmenteil anordenbar, dass das Solarmodul in einer gewünschten, schrägen Stellung zum Untergrund aufstellbar ist.

Durch Solaraufsteller ist das Solarmodul anschließend derart schräg zum Untergrund aufgestellt, dass eine erste der vier vom Rahmen des Solarmodules gebildete Außenkanten eine horizontal verlaufende Unterkante, eine zweite der vier Außenkanten eine horizontal verlaufende, höher als die Unterkante verlaufende Oberkante und die zwei weiteren Seitenkanten schräg von der Oberkante zur Unterkante abfallende Seitenkanten bilden.

Grundsätzlich haben sich entsprechende Aufsteller zur schrägen Aufstellung von Solarmodulen bewährt. Nachteilig ist jedoch, dass diese Aufsteller verhältnismäßig kompliziert aufgebaut und zu handhaben sind. Insoweit benötigt es teilweise eine erhebliche Zeit, bis Solarmodule an den Haltemitteln befestigt und in einer gewünschten schrägen Stellung zum Untergrund ausgerichtet sind. Ferner sind die aus dem Stand der Technik bekannten Solaraufsteller regelmäßig raumgreifend ausgebildet, so dass diese sowohl bei ihrem Transport als auch bei ihrer Handhabung und Aufstellung einen erheblichen Platzbedarf haben.

Vor diesem Hintergrund liegt der Erfindung die Aufgabe zugrunde, einen Solaraufsteller zur schrägen Aufstellung eines tafelförmigen Solarmoduls mit einer rechteckigen, von vier Außenkanten gebildeten Außenkontur auf einem Untergrund zur Verfügung zu stellen, durch welchen ein Solarmodul schnell und einfach in einer schrägen Stellung zum Untergrund aufstellbar ist. Ferner soll der Solaraufsteller möglichst wenig raumgreifend ausgebildet und einfach aufgebaut sein.

Zur Lösung dieser Aufgabe wird erfindungsgemäß zur Verfügung gestellt ein Aufstellsystem zur schrägen Aufstellung eines tafelförmigen Solarmodules mit einer rechteckigen, von vier Außenkanten gebildeten Außenkontur auf einem Untergrund, wobei das Solarmodul derart schräg aufstellbar ist, dass eine erste der vier Außenkanten eine horizontal verlaufende Unterkante, eine zweite der vier Außenkanten eine horizontal verlaufende, höher als die Unterkante verlaufende Oberkante und die zwei weiteren Seitenkanten schräg von der Oberkante zur Unterkante abfallende Seitenkanten bilden, mit folgenden Merkmalen:
Einer Anzahl von einzelnen Aufstellern zur Aufstellung des Solarmodules auf dem Untergrund;
eine Anzahl der Aufsteller weist jeweils zum einen eine Auflage auf, auf die das Solarmodul im Bereich seiner Unterkante oder Seitenkante in einer ersten Höhe auflegbar ist, zum weiteren einen Anschlag auf, gegen den das Solarmodul bei Aufliegen auf der Auflage schwerkraftbedingt mit seiner Unterkante anschlägt, und ferner ein Haltemittel auf, durch das das Solarmodul bei Aufliegen auf der Auflage und Anschlagen gegen den Anschlag an dem jeweiligen Aufsteller halterbar ist;
eine Anzahl der Aufsteller weist jeweils zum einen eine Auflage auf, auf die das Solarmodul im Bereich seiner Oberkante oder Seitenkanten in einer zweiten Höhe auflegbar ist, zum weiteren einen Anschlag auf, gegen den das Solarmodul bei Auflegen auf der Auflage mit einer Seitenkante führbar ist, und ferner ein Haltemittel auf, durch das das Solarmodul bei Aufliegen auf der Auflage und Anschlagen gegen den Anschlag an dem jeweiligen Aufsteller halterbar ist;
wobei die erste Höhe in einer geringeren Höhe als die zweite Höhe verläuft.

Das erfindungsgemäße Aufstellsystem ist damit äußerst einfach aufgebaut. Es umfasst allein eine Anzahl von einzelnen, isolierten Aufstellern zur Aufstellung des Solarmodules auf dem Untergrund. Diese Aufsteller sind derart ausgebildet, dass sie derart im Bereich der Unterkante sowie der beiden Seitenkanten des Solarmodules befestigbar sind, dass das Solarmodul in einer gewünschten schrägen Stellung zum Untergrund aufstellbar ist. Die einzelnen Aufsteller des erfindungsgemäßen Aufstellsystems benötigen nur sehr wenig Material zu ihrer Herstellung sowie Platz zu deren Transport, so dass diese sehr einfach und kostengünstig herzustellen sind sowie sehr einfach und raumsparend transportiert werden können.

Grundsätzlich eignet sich das erfindungsgemäße Aufstellsystem zur schrägen Aufstellung eines tafelförmigen Solarmodules auf einem beliebigen Untergrund, bevorzugt auf einem im wesentlichen ebenen Untergrund wie beispielsweise einem Flachdach oder einer sonstigen im wesentlichen ebenen Fläche.

Unter einem Solarmodul wird erfindungsgemäß ein tafelförmiges Solarmodul, wie es aus dem Stand der Technik bekannt ist, verstanden, also ein tafelförmiges Solarmodul mit einer rechteckigen, von vier Außenkanten gebildeten Außenkontur, wobei die vier Außenkanten von einem Metallrahmen, insbesondere einem Aluminium- oder Stahlrahmen gebildet sein können, die auf einen Träger aufgebrachte Photovoltaikelemente oder Sonnenkollektoren umfassen.

Ein wesentlicher Vorteil des erfindungsgemäßen Aufstellsystems beruht darin, dass die Aufsteller des Systems einzeln, also isoliert ausgebildet sind. Die Aufsteller des erfindungsgemäßen Aufstellsystems sind demnach untereinander nicht durch konstruktive Elemente des Aufstellsystems, also beispielsweise ein gemeinsames Rahmenteil oder sonstige konstruktive Elemente des Aufstellsystems, miteinander verbunden. Dies ermöglicht es, die Aufsteller des erfindungsgemäßen Aufstellsystems besonders einfach herzustellen, zu transportieren, zu handhaben und an einem Solarmodul zu befestigen.

Wie zuvor ausgeführt, ist eine Anzahl der Aufsteller derart ausgebildet, dass das Solarmodul auf diese im Bereich seiner Unterkante oder Seitenkanten in einer ersten Höhe auflegbar und an diesen halterbar ist, während eine weitere Anzahl der Aufsteller derart ausgebildet ist, dass auf diese das Solarmodul im Bereich seiner Oberkante oder Seitenkanten in einer zweiten Höhe auflegbar und halterbar ist. Indem die Aufsteller erfindungsgemäß ferner derart ausgebildet sind, dass die erste Höhe in einer geringeren Höhe als die zweite Höhe verläuft, ergibt sich hieraus eine definierte Schrägstellung des durch das Aufstellsystem auf einem Untergrund aufgestellten Solarmodules. Hierdurch ist ein Solarmodul durch das erfindungsgemäße Aufstellsystem in einer gewünschten Schrägstellung zum Untergrund auf diesem aufstellbar.

Nach einer Ausführungsform kann vorgesehen sein, dass die Aufsteller derart ausgebildet sind, dass die erste und/oder die zweite Höhe der Aufsteller veränderbar ist, so dass auch die Schrägstellung, in der Solarmodul über das Aufstellsystem auf einem Untergrund aufstellbar ist, veränderbar ist.

Nach einer besonders bevorzugten Ausführungsform sind die erste und die zweite Höhe der Aufsteller jedoch nicht veränderbar. Dies ermöglicht es, die Aufsteller des erfindungsgemäßen Aufstellsystems besonders einfach, kostengünstig und robust zu gestalten.

Nach einer besonders bevorzugten Ausführungsform weist wenigstens einer der Aufsteller ein Basisteil auf, an dem wenigstens eines der folgenden Elemente der Aufsteller angeordnet ist: wenigstens eine Auflage, wenigstens ein Anschlag oder wenigstens ein Haltemittel. Beispielsweise können auch mehrere oder sämtliche Aufsteller des Aufstellsystems entsprechend gestaltet sein.

Nach einer Fortbildung dieses Erfindungsgedankens kann das Aufstellsystem derart ausgebildet sein, dass das Basisteil aus Flachstahl ausgebildet ist, also aus einem flach ausgewalzten Stück Stahl.

Ein solcher Flachstahl kann derart umgeformt sein, dass er das Basisteil eines Aufstellers bildet. Insoweit kann ein Aufsteller beispielsweise ein Basisteil in Form eines umgeformten Flachstahls aufweisen, an dem Auflag, Anschlag oder Haltemittel angeordnet sein können.

Nach einem Ausführungsbeispiel kann ein Basisteil aus Flachstahl beispielsweise derart umgeformt sein, dass es im wesentlichen die Form eines U oder eines Z einnimmt. Soweit ein Aufsteller ein Basisteil in Form eines umgeformten Flachstahls aufweist, das im wesentlichen in die Form eines U oder eines Z umgeformt ist, kann einer der beiden äußeren Schenkel beispielsweise derart ausgebildet sein, dass er auf einem Untergrund auflegbar ist, während der andere äußere Schenkel derart ausgebildet sein kann, dass an diesem wenigstens eines der folgenden Elemente des Aufstellers angeordnet ist: wenigstens eine Auflage, wenigstens ein Anschlag oder wenigstens ein Haltemittel. Das die beiden äußeren Schenkel verbindende Zwischenstück kann beispielsweise derart dimensioniert sein, dass durch dieses im wesentlichen die erste Höhe beziehungsweise die zweite Höhe definiert ist.

Der besondere Vorteil eines Aufstellers mit einem solchen Basisteil aus Flachstahl besteht insbesondere darin, dass ein solcher Aufsteller besonders einfach, schnell, kostengünstig und robust ausbildbar ist.

Jeder Aufsteller kann eine oder mehrere Auflagen aufweisen. Die Auflage der Aufsteller kann beispielsweise ein einfaches flaches Element, beispielsweise eine Metallplatte sein, auf der das Solarmodul im Bereich seiner Unterkante beziehungsweise seiner Seitenkanten auflegbar ist. Die Auflage kann beispielsweise ein eigenständiges Element sein oder durch einen Abschnitt des Basisteils eines Aufstellers gebildet sein. Beispielsweise kann es sich bei der Auflage um eine Metallplatte handeln, die an dem Basisteil befestigt ist, beispielsweise durch eine Niet-, Schraub- oder Schweißverbindung. Auf der dem Solarmodul zugewandten Seite der Auflage kann diese beispielsweise eine Rutschsicherung aufweisen, beispielsweise in Form einer Gummibeschichtung. Die Auflage kann beispielsweise derart ausgebildet sein, dass das Solarmodul bei Aufliegen auf der Auflage flächig auf diesem aufliegt. Hierzu kann die Auflage beispielsweise derart ausgebildet sein, dass sich die dem Solarmodul zugewandte Fläche der Auflage in der Ebene der Erstreckung des Solarmodules bei Aufliegen auf den Auflagen erstreckt.

Jeder Aufsteller kann einen oder mehrere Anschläge aufweisen. Der Anschlag der Aufsteller kann beliebig derart gestaltet sein, dass die Unterkanten beziehungsweise Seitenkanten des Solarmoduls hiergegen anschlagen können. Ebenso wie die Auflage, kann auch der Anschlag als eigenständiges Element ausgebildet sein oder durch einen Abschnitt des Basisteils eines Aufstellers gebildet sein. Beispielsweise kann ein Anschlag in Form einer Metallplatte oder in Form eines oder mehrerer Metallstifte ausgebildet sein, die an dem Basisteil befestigt sein können, beispielsweise durch eine Niet-, Schraub- oder Schweißverbindung.

Jeder Aufsteller kann ein oder mehrer Haltemittel aufweisen. Das Haltemittel kann beliebig derart gestaltet sein, dass das Solarmodul an dem jeweiligen Aufsteller, auf dessen Auflage es aufliegt und gegen dessen Anschlag es anschlägt, halterbar ist. Nach einer bevorzugten Ausführungsform ist das Haltemittel derart ausgebildet, dass das Solarmodul durch das Haltemittel kraftschlüssig an dem Aufsteller halterbar ist. Beispielsweise umfasst das Haltemittel ein Element, das unter Umgreifung der Unter- oder Seitenkante des Solarmodules dieses mit einer Kraft gegen den Aufsteller führt beziehungsweise drückt, so dass das Solarmodul kraftschlüssig an diesem halterbar ist. Zur Aufbringung der Haltekraft, durch die das Solarmodul insbesondere kraftschlüssig an dem Haltemittel halterbar ist, kann das Haltemittel Befestigungsmittel umfassen, durch die das Haltemittel an dem Aufsteller befestigbar ist, bevorzugt beispielsweise Schraubmittel, durch die das Haltemittel an den Aufsteller schraubbar ist. Insoweit kann das Haltemittel derart ausgebildet sein, dass es unter Umgreifung der Unter- oder Seitenkante des Solarmodules gegen den Aufsteller schraubbar ist.

Nach einer Ausführungsform ist vorgesehen, dass ein Element der Aufsteller sowohl den Anschlag als auch das Haltemittel des jeweiligen Aufstellers bildet. Beispielsweise kann ein Element vorgesehen sein, durch das die Unter- oder Seitenkante des Solarmodules derart umgreifbar ist, dass die Unter- oder Seitenkante sowohl gegen einen Abschnitt des Elementes anschlagbar als auch das Solarmodul durch das Element am Aufsteller halterbar ist.

Wie zuvor ausgeführt, weist das Aufstellsystem eine Anzahl Aufsteller auf, die zum einen jeweils eine Auflage aufweisen, auf die das Solarmodul im Bereich seiner Unterkante oder Seitenkanten in einer ersten Höhe auflegbar ist, die zum weiteren jeweils einen Anschlag aufweisen, gegen den das Solarmodul bei Aufliegen auf der Auflage schwerkraftbedingt mit seiner Unterkante anschlägt, und ferner jeweils ein Haltemittel aufweisen, durch das das Solarmodul bei Aufliegen auf der Auflage und Anschlagen gegen den Anschlag an dem jeweiligen Aufsteller halterbar ist.

Diese Aufsteller, auf die das Solarmodul im Bereich seiner Unterkante oder Seitenkanten auflegbar ist, werden nachfolgend auch als "untere Aufsteller" bezeichnet. Durch Auflage des Solaraufstellers auf der Auflage der unteren Aufsteller ist eine Aufstellungshöhe der Unterkante des durch die Aufsteller aufgestellten Solarmoduls definiert. Gleichzeitig sind die Anschläge der unteren Aufsteller derart an den unteren Aufstellern angeordnet, dass das Solarmodul bei Aufliegen auf der Auflage der unteren Aufsteller schwerkraftbedingt mit seiner Unterkante an die Anschläge der unteren Aufsteller anschlägt beziehungsweise schwerkraftbedingt gegen diese rutscht. Dies hat zahlreiche Vorteile. So ist durch das schwerkraftbedingte Rutschen des Solarmodules eine definierte Position des Solarmodules an den unteren Aufstellern gegeben; ferner ist eine besonders stabile Lage des Solarmodules an den unteren Aufstellern gegeben. Zur Fixierung dieser stabilen Lage sind ferner die Haltemittel vorgesehen, durch die das Solarmodul bei Aufliegen an der Auflage und Anschlagen gegen den Anschlag der unteren Aufsteller an diesen halterbar ist.

Die unteren Aufsteller können auch derart ausgebildet sein, dass auf diese sowohl die Unterkante als auch eine Seitenkante des Solarmodules auflegbar ist. Hierzu können die Aufsteller jeweils einen oder mehrere Auflagen aufweisen. Bevorzugt sind die unteren Aufsteller derart ausgebildet, dass auf deren Auflage die Unterkante oder ein zur Unterkante benachbarter Bereich einer Seitekante des Solarmodules auflegbar ist.

Nach einer Ausführungsform sind untere Aufsteller vorgesehen, die derart ausgebildet sind, dass auf die wenigstens ein Auflage dieser Aufsteller die Unterkante oder eine Seitenkante des Solarmodules auflegbar ist; gleichzeitig sind die Haltemittel derart ausgebildet, dass diese die Unterkante oder die Seitenkante des Solarmodules an ihrem zur Unterkante benachbarten Abschnitt umgreifen.

Es kann vorgesehen sein, die unteren Aufsteller derart auszubilden, dass diese zur Aufstellung mehrerer, insbesondere benachbarter Solarmodule ausgebildet sind. Insoweit kann ein Aufsteller beispielsweise mehrere Auflagen und/oder mehrere Anschläge und/oder mehrer Haltemittel umfassen, so dass auf einen unteren Aufsteller benachbarte Solarmodule auflegbar beziehungsweise gegen dessen Anschläge anschlagbar beziehungsweise durch diese halterbar sind.

Wie zuvor ausgeführt, weist das erfindungsgemäße Aufstellersystem eine Anzahl Aufsteller auf, die zum einen jeweils eine Auflage aufweisen, auf die das Solarmodul im bereich seiner Oberkante oder Seitenkanten in einer zweiten Höhe auflegbar ist, die zum weiteren jeweils einen Anschlag aufweisen, gegen den das Solarmodul bei Auflegen auf der Auflage mit einer Seitenkante führbar ist, und die ferner jeweils ein Haltemittel aufweisen, durch das das Solarmodul bei Aufliegen auf der Auflage und Anschlagen gegen den Anschlag an den jeweiligen Aufstellern halterbar ist.

Diese Aufsteller, auf die das Solarmodul im Bereich seiner Oberkante oder Seitenkanten auflegbar ist, werden nachfolgend auch als "obere Aufsteller" bezeichnet. Durch Auflage der Oberkante oder Seitenkanten des Solaraufstellers auf die Auflagen der oberen Aufsteller in der zweiten Höhe und die gleichzeitige Auflage der Unterkante oder Seitenkanten des Solarmodules auf die unteren Aufsteller ist eine bestimmte Schrägstellung des durch die Aufsteller aufgestellten Solarmodules definiert. Die Aufsteller können demnach derart dimensioniert sein, dass durch diese das Solarmodul in einer gewünschten Schrägstellung zur horizontalen Ebene beziehungsweise zum Untergrund ausgerichtet ist.

Gleichzeitig sind die Anschläge der oberen Aufsteller derart an den oberen Aufstellern angeordnet, dass das Solarmodul bei Aufliegen auf den Auflagen der oberen Aufsteller mit seinen Seitenkanten, in deren Bereich des Solarmoduls die auf den Auflagen der oben Aufstellern aufliegen, gegen den Anschlag der betreffenden Auflagen führbar beziehungsweise positionierbar ist. Hierdurch kann das Solarmodul in eine stabile, durch die Anschläge definierte Lage positioniert werden. Besonders vorteilhaft ist ferner, dass der Umstand, dass das Solarmodul mit seinen schräg abfallenden Seitenkanten gegen die Anschläge der oberen Aufsteller geführt ist, ein Verrutschen des Solarmoduls in die abfallende Richtung zulässt, bis das Solarmodul mit seiner Unterkante gegen die Anschläge der unteren Aufstellern anschlägt. Das Solarmodul ist mittels der erfindungsgemäßen Aufsteller somit schwerkraftbedingt in eine stabile Position bewegbar. Zur Fixierung dieser stabilen Position sind ferner die Haltemittel an den oberen Aufstellern vorgesehen, durch die das Solarmodul bei Auflegen auf den Auflagen der Aufsteller und Anschlagen gegen die Anschläge halterbar ist.

Die oberen Aufsteller können auch derart ausgebildet sein, dass auf diese sowohl die Oberkante als auch eine Seitenkante des Solarmodules auflegbar ist. Hierzu können die Aufsteller jeweils einen oder mehrere Auflagen aufweisen. Bevorzugt sind die oberen Aufsteller derart ausgebildet, dass auf deren Auflage die Seitenkante oder ein zu einer Seitenkante benachbarter Bereich der Oberkante des Solarmodules auflegbar ist.

Nach einer Ausführungsform sind obere Aufsteller vorgesehen, die derart ausgebildet sind, dass die Oberkante oder Seitenkanten des Solarmodules auf diese auflegbar sind; gleichzeitig können die Haltemittel derart ausgebildet sein, dass diese die Seitenkanten des Solarmoduls umgreifen.

Es kann vorgesehen sein, die oberen Aufsteller derart auszubilden, dass diese zur Aufstellung mehrerer, insbesondere benachbarter Solarmodule ausgebildet sind. Insoweit kann ein oberer Aufsteller beispielsweise mehrere Auflagen und/oder mehrere Anschläge und/oder mehrere Haltemittel umfassen, so dass auf einen oberen Aufsteller mehrere benachbarte Solarmodule auflegbar beziehungsweise gegen deren Anschläge anschlagbar beziehungsweise durch deren Haltemittel halterbar sind.

Gegenstand der Erfindung ist auch ein tafelförmiges Solarmodul mit einer rechteckigen, von vier Außenkanten gebildeten Außenkontur und mit einem Aufstellsystem zur schrägen Aufstellung des Solarmodules auf einem Untergrund, wobei das Solarmodul derart schräg aufstellbar ist, dass eine erste der vier Außenkanten eine horizontal verlaufende Unterkante, eine zweite der vier Außenkanten eine horizontal verlaufende, höher als die Unterkante verlaufende Oberkante und die zwei weiteren Seitenkanten schräg von der Oberkante zur Unterkante abfallende Seitenkanten bilden, mit folgenden Merkmalen:
Einer Anzahl von einzelnen Aufstellern zur Aufstellung des Solarmodules auf dem Untergrund;
eine Anzahl der Aufsteller weist jeweils zum einen eine Auflage auf, auf die das Solarmodul im Bereich seiner Unterkante in einer ersten Höhe aufliegt, zum weiteren einen Anschlag auf, gegen den das Solarmodul schwerkraftbedingt mit seiner Unterkante anschlägt, und ferner ein Haltemittel auf, durch das das Solarmodul an dem jeweiligen Aufsteller gehalten ist;
eine Anzahl der Aufsteller weist jeweils zum einen eine Auflage auf, auf die das Solarmodul im Bereich seiner Seitenkanten in einer zweiten Höhe aufliegt, zum weiteren einen Anschlag auf, gegen den das Solarmodul geführt ist, und ferner ein Haltemittel auf, durch das das Solarmodul an dem jeweiligen Aufsteller gehalten ist; wobei
die erste Höhe in einer geringeren Höhe als die zweite Höhe verläuft.

Das Solarmodul und die Aufsteller des erfindungsgemäßen tafelförmigen Solarmodules können wie hierin beschrieben ausgebildet sein.

Weitere Merkmale der Erfindung ergeben sich aus den Ansprüchen, den Figuren und der dazugehörigen Figurenbeschreibung.

Sämtliche der hierin zur Erfindung offenbarten Merkmale sind, einzeln oder in Kombination, beliebig miteinander kombinierbar.

Ein Ausführungsbeispiel der Erfindung wird anhand der nachfolgenden Figurenbeschreibung näher erläutert.

Dabei zeigt
- Figur 1: eine perspektivische Ansicht eines tafelförmigen Solarmodules,
- Figur 2: eine seitliche Ansicht eines unteren Aufstellers eines ersten Ausführungsbeispiels eines Aufstellsystems,
- Figur 3: eine seitliche Ansicht eines oberen Aufstellers des ersten Ausführungsbeispiels eines Aufstellsystems,
- Figur 4: eine perspektivische Ansicht des ersten Ausführungsbeispiels eines Aufstellsystems,
- Figur 5: eine perspektivische Ansicht des Solarmoduls gemäß Figur 1 mit dem Aufstellsystem nach Figur 4,
- Figur 6: eine seitliche Ansicht eines unteren Aufstellers eines zweiten Ausführungsbeispiels eines Aufstellsystems,
- Figur 7: das Basisteil des unteren Aufstellers nach Figur 6,
- Figur 8: eine Frontalansicht auf eine Auflage für das Basisteil nach Figur 7,
- Figur 9: eine seitliche Ansicht auf die Auflage nach Figur 8,
- Figur 10: eine perspektivische Ansicht des Basisteils nach Figur 7 mit der Auflage nach den Figuren 8 und 9,
- Figur 11: eine seitliche Ansicht eines oberen Aufstellers des zweiten Ausführungsbeispiels eines Aufstellsystems,
- Figur 12: das Basisteil des oberen Aufstellers nach Figur 11 und
- Figur 13: das Basisteil nach Figur 12 mit einer Auflage nach den Figuren 8 und 9.

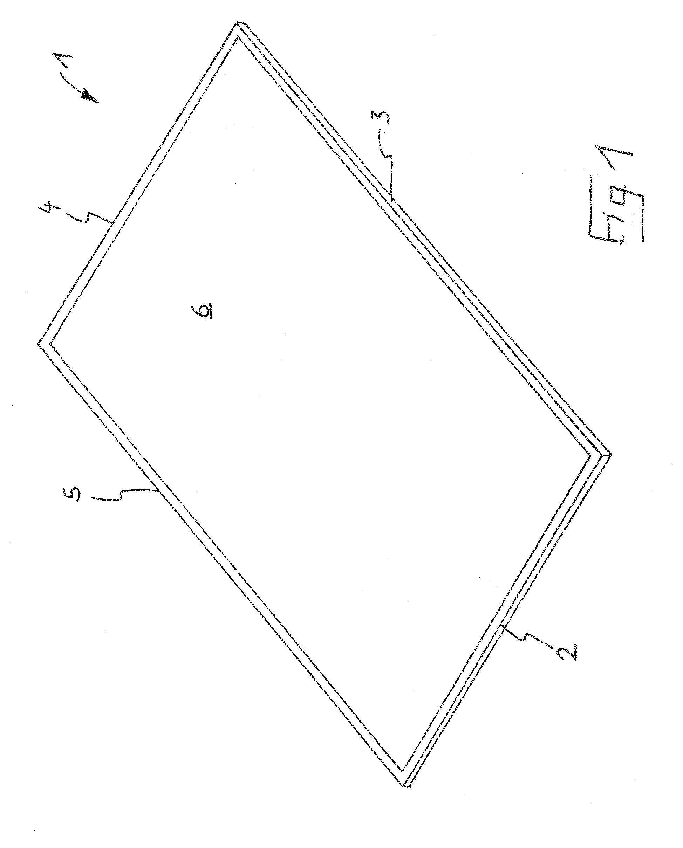

Bei dem in Figur 1 in seiner Gesamtheit mit dem Bezugszeichen 1 gekennzeichneten Solarmodul handelt es sich um ein typisches tafelförmiges Solarmodul in Form eines Photovoltaikmoduls. Das Solarmodul 1 weist eine rechteckige, von vier Außenkanten 2, 3, 4, 5, gebildeten Außenkontur auf. Die vier Außenkanten 2, 3, 4, 5 sind gebildet von einem rechteckigen Aluminiumrahmen, der auf einen Träger aufgebrachte Solarzellen 6 umfasst. Das Solarmodul 1 soll durch ein erfindungsgemäßes Aufstellsystem in seiner in Figur 1 dargestellten schrägen Stellung auf einem Untergrund aufstellbar sein, also mit einer horizontal verlaufenden Unterkante 2, einer horizontal verlaufenden, höher als die Unterkante 2 verlaufenden Oberkante 4 sowie den beiden Seitenkanten 3, 5, die schräg von der Oberkante 4 zur Unterkante 2 abfallen.

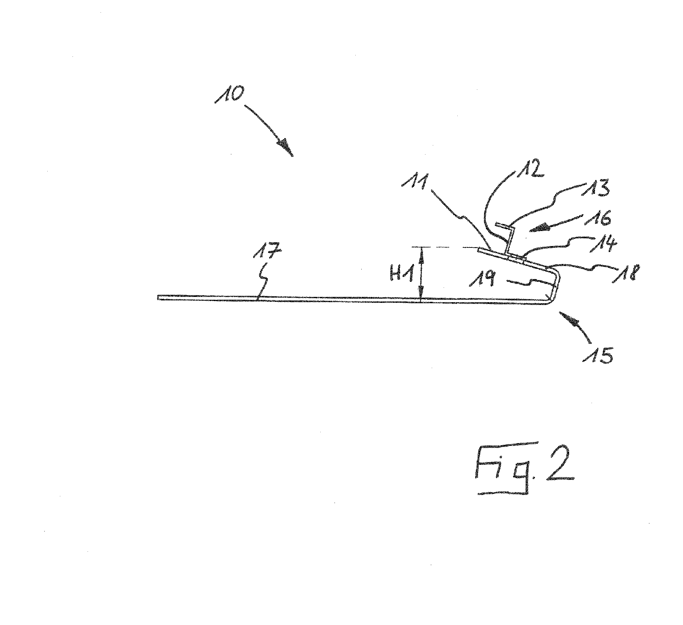

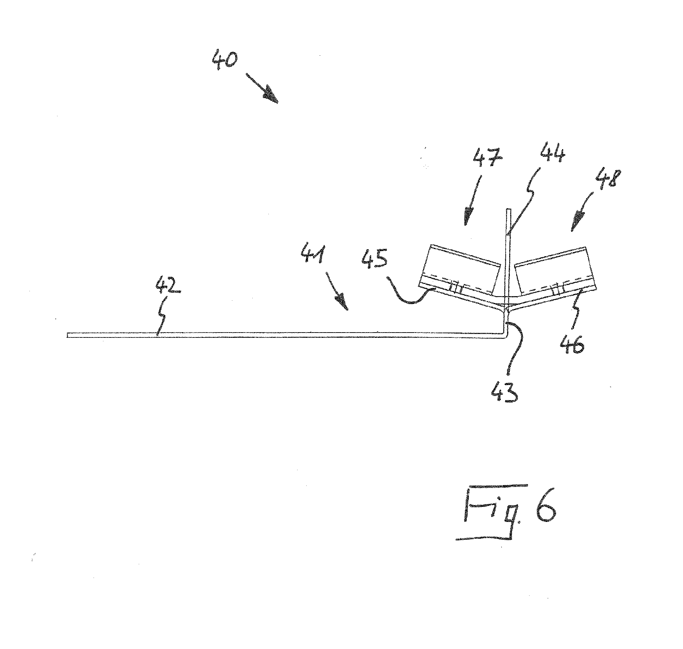

Zur entsprechend schrägen Aufstellung des Solarmoduls 1 dient das in den Figuren 2 bis 5 dargestellte erste Ausführungsbeispiel eines erfindungsgemäßen Aufstellsystems sowie das in den Figuren 6 bis 13 dargestellte zweite Ausführungsbeispiel eines erfindungsgemäßen Aufstellsystems.

Figur 2 zeigt einen unteren Aufsteller 10, wobei das Aufstellsystem eine Anzahl solch unterer Aufsteller 10 umfasst. Der untere Aufsteller 10 weist eine Auflage 11 auf, auf die Solarmodul 1 im Bereich seiner Unterkante 2 in einer ersten Höhe H1 auflegbar ist. Ferner weist der untere Aufsteller 10 einen Anschlag 12 auf, gegen den das Solarmodul 1 bei Aufliegen auf der Auflage 11 schwerkraftbedingt mit seiner Unterkante 2 anschlägt. Ferner weist der untere Aufsteller 10 ein Haltemittel 13 auf, durch das das Solarmodul 1 bei Aufliegen auf der Auflage 11 und Anschlagen gegen den Anschlag 12 an dem unteren Aufsteller 10 halterbar ist. Dabei bildet ein Element 16 des Aufstellers 10 sowohl den Anschlag 12 als auch das Haltemittel 13. Konkret ist dieses Element 16 in Form eines Z ausgebildet, wobei einer der äußeren Schenkel dieses großen Z derart ausgebildet ist, dass es die Unterkante 2 des Solarmoduls 1 umgreift und hierdurch als Haltemittel wirkt, der zweite äußere Schenkel 14 dieses Elementes 16 zur Verschraubung an einem Basisteil 15 des unteren Aufstellers 10 ausgebildet ist und der diese beiden äußeren Schenkel 13, 14 verbindende mittlere Abschnitt des Elementes 16 den Anschlag 12 für die Unterkante 2 des Solarmoduls 1 bildet. Zur Verschraubung des zur Verschraubung mit dem Basisteil 15 ausgebildeten äußeren Schenkels 14 dieses Elementes 16, weisen dieser Schenkel 14 und das Basisteil 15 des unteren Aufstellers 10 korrespondierende Öffnungen auf, durch die Schraubmittel zur Verschraubung des Elementes 16 am Basisteil 15 führbar sind.

Das Basisteil 15 des unteren Aufstellers 10 weist im wesentlichen die Form eines großen U auf, wobei ein erster äußerer Schenkel 17 dieses Basisteils 15 zur Auflage auf einen Untergrund, ein zweiter äußerer Schenkel 18 zur Anordnung des Elementes 16 ausgebildet ist und das diesen beiden Schenkeln 17, 18 liegende Zwischenstück 19 des Basisteils 15 diese beiden Schenkel 17, 18 mit Distanz verbindet. Der dem freien Ende des Schenkels 18 des Basisteils 15 benachbarte Abschnitt ist als Auflage 11 zur Auflage der Unterkante 2 des Solarmodules 1 ausgebildet.

Zur Halterung des unteren Aufstellers 10 am Solarmodul 1 wird das Element 16, wenn das Solarmodul 1 mit seiner Unterkante 2 auf der Auflage 11 aufliegt und gegen den Anschlag 12 anschlägt, gegen den Schenkel 18 des Basisteils 15 geschraubt, bis der das die Unterkante 2 umgreifende, das Haltemittel 13 bildende Abschnitt des Elementes 16 fest gegen die Unterkante 2 des Solarmodules 1 anliegt und diese hierdurch kraftschlüssig am unteren Aufsteller 10 gehalten ist.

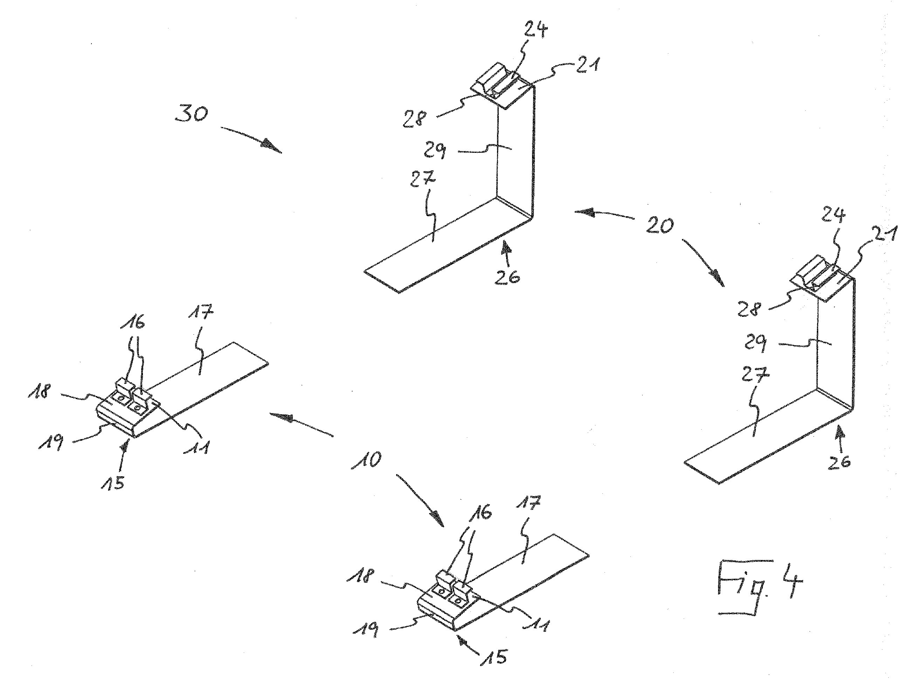

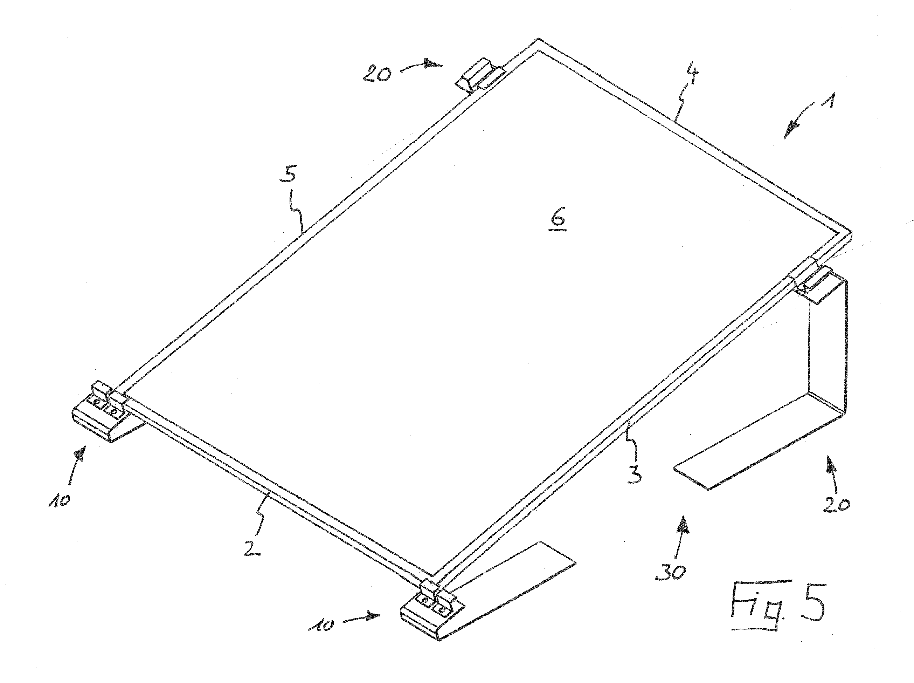

Wie die Figuren 4 und 5 zeigen werden, sind am Basisteil 15 zwei der vorbeschriebenen Elemente 16 nebeneinander angeordnet, so dass durch einen einzigen unteren Aufsteller 10 die Unterkanten 2 zweier benachbarter Solarmodule 1 halterbar sind.

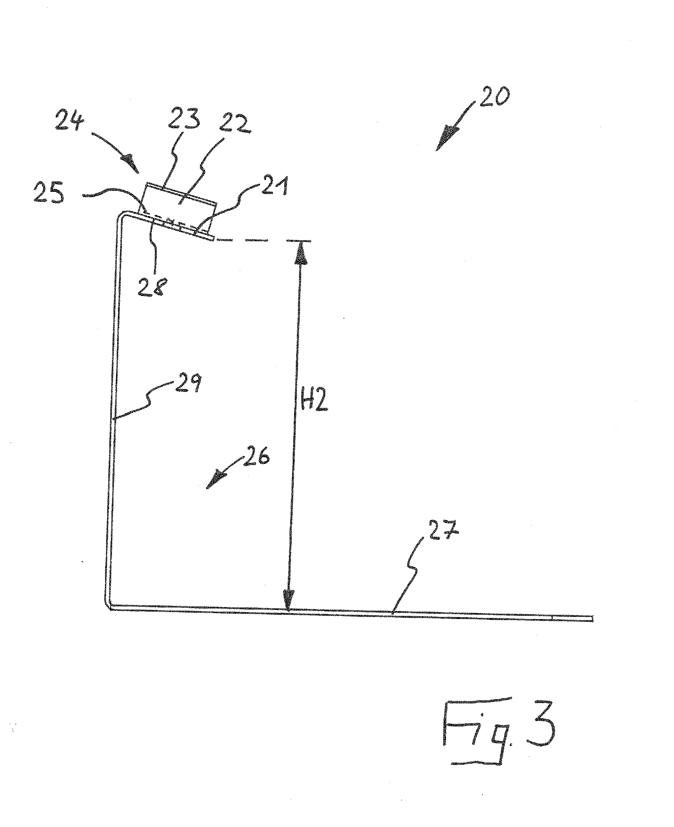

Der in Figur 3 dargestellte obere Aufsteller 20 einer Anzahl oberer Aufsteller des Aufstellsystems des ersten Ausführungsbeispiels weist eine Auflage 21 auf, auf die eine Seitenkante 3, 5 des Solarmodules 1 auflegbar ist. Ferner weist der obere Aufsteller 20 einen Anschlag 22 auf, gegen den das Solarmodul 1 bei Aufliegen auf der Auflage 21 mit einer seiner Seitenkanten 3, 5 führbar ist. Ferner weist der obere Aufsteller 20 ein Haltemittel 23 auf, durch das eine der Seitenkanten 3, 5 des Solarmoduls 3 umgreifbar ist und bei Aufliegen auf der Auflage 21 und Anschlagen gegen den Anschlag 22 an dem oberen Aufsteller 20 kraftschlüssig halterbar ist. Dabei sind der Anschlag 22 und das Haltemittel 23 aus einem Element 24 ausgebildet, das zwei spiegelsymmetrischen Z gleicht. Ein jedes dieser Z weist jeweils einen ersten äußeren Schenkel auf, der als Haltemittel 23 ausgebildet ist, einen zweiten äußeren Schenkel 25 auf, der zur Befestigung an einem Basisteil 26 des oberen Aufstellers 20 ausgebildet ist und einen dazwischen liegenden Abschnitt auf, der als Anschlag 22 ausgebildet ist. Die jeweils zur Befestigung am Basisteil 26 ausgebildeten Schenkel 25 dieser beiden Z sind dabei einstückig miteinander verbunden. Aufgrund dieser symmetrischen Anordnung können die Seitenkanten 3, 5 zweier benachbarter Solarmodule 1 durch nur einen oberen Aufsteller 20 an diesem gehalten werden. Zur Halterung der Solarmodule 1 an dem oberen Aufsteller 20 weisen die zur Befestigung an dem Basisteil 26 des oberen Aufstellers 20 ausgebildeten äußeren Schenkel 25 des Elementes 24 zwei Öffnungen auf, die mit Öffnungen im Basisteil 26 korrespondieren, so dass durch diese Schraubmittel zur Verschraubung des Elementes 24 am Basisteil 26 führbar sind. Liegt dabei eine Seitenkante 3, 5 eines Solarmodules 1 auf einer Auflage 21 auf und ist diese Seitenkante 3, 5 gegen den Anschlag 22 geführt, wird das Element 24 unter Umgreifung des Haltemittels 23 einer Seitenkante 3, 5 gegen das Basisteil 26 geschraubt, so dass das Solarmodul 1 anschließend kraftschlüssig am oberen Aufsteller 20 gehalten ist. Das Element 24 ist an einem im wesentlichen U-förmig ausgebildeten Basisteil 26 des oberen Aufsteller 20 angeordnet. Dabei ist dieses U-förmige Basisteil 26 aus einem Flachstahl ausgeformt. Ein erster äußerer Schenkel 27 des Basisteils 26 ist zur Auflage auf einem Untergrund und der zweite äußere Schenkel 28 zur Verbindung mit dem Element 24 ausgebildet. Das dazwischen liegende Zwischentück 29 verbindet diese beiden äußeren Schenkel 27, 28 mit Distanz. Hierdurch verläuft der zweite Schenkel 28 mit einer Höhe H2 zum ersten Schenkel 27 beziehungsweise zum Untergrund, wobei die erste Höhe H1 des unteren Aufstellers 10 in einer geringeren Höhe H1 als die zweite Höhe H2 des oberen Aufstellers 20 verläuft.

Wie die Figuren 2 und 3 zeigen, sind die Auflagen 11, 21 der unteren und oberen Aufsteller 10, 20 derart ausgebildet, dass das Solarmodul 1 bei Aufliegen auf den Auflagen 11, 21 flächig auf diesen aufliegt. Hierzu sind die Auflagen 11, 21 derart ausgebildet sein, dass sich die dem Solarmodul 1 zugewandte Fläche der Auflagen 11, 21 in der Ebene der Erstreckung des Solarmodules 1 bei dessen Aufliegen auf den Auflagen 11, 21 erstreckt, wozu der äußere Schenkel 18 des unteren Aufstellers 10 leicht nach oben abgeknickt ist, während der äußere Schenkel 28 des oberen Aufstellers leicht nach unten abgeknickt ist.

Figur 4 zeigt eine perspektivische Ansicht des Aufstellersystems 30 gemäß dem ersten Ausführungsbeispiel.

Figur 5 zeigt eine perspektivische Ansicht des tafelförmigen Solarmoduls 1 mit dem Aufstellsystem 30 gemäß Figur 4.

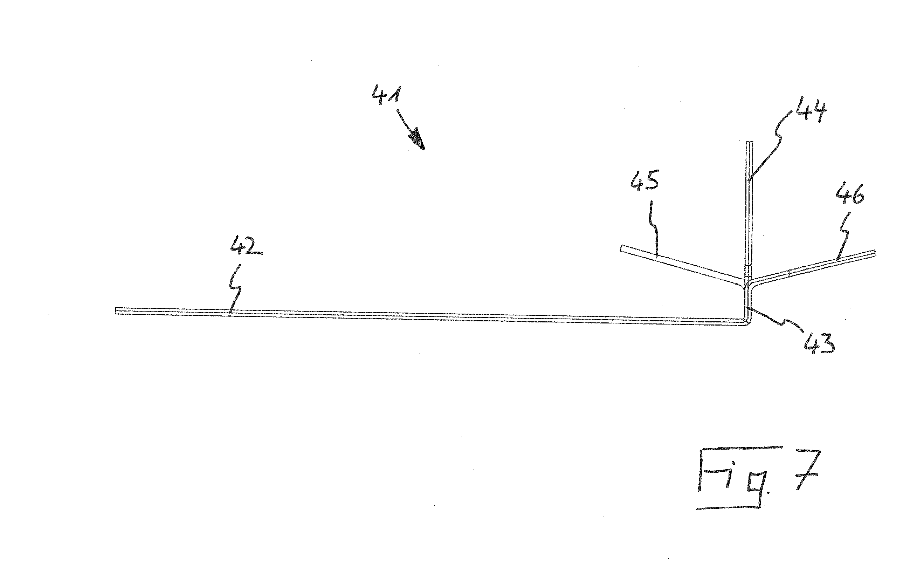

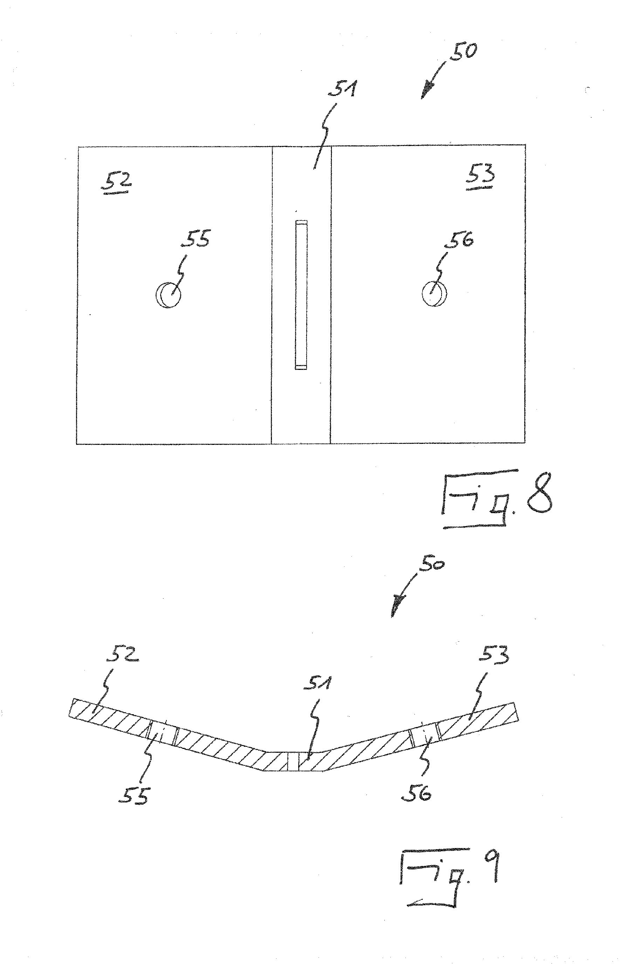

Bei dem in Figur 6 dargestellten zweiten Ausführungsbeispiel eines erfindungsgemäßen Aufstellsystems weist der untere Aufsteller 40 wiederum ein Basisteil 41 auf, das in Figur 7 dargestellt ist. Dieses Basisteil 41 ist wiederum aus einem Flachstahl ausgeformt, wobei dieses Basisteil 41 einen ersten äußeren Schenkel 42 aufweist, der zur Auflage auf einen Untergrund ausgebildet ist, und ein davon abknickendes Zwischenstück 43 aufweist, das sich bei Auflage des äußeren Schenkels 42 auf einen Untergrund vertikal nach oben erstreckt. Der sich an dieses Zwischenstück 43 anschließende Abschnitt des Basisteils 41 weist einen mittleren Schenkel 44 auf, der sich in Richtung des Abschnitts 43 weiter nach oben erstreckt. Ferner weist der sich an das Zwischenstück 43 anschließende Abschnitt des Basisteils 41 zwei äußere Schenkel 45, 46 auf, die in entgegengesetzte Richtungen nach außen abgewinkelt sind, so dass einer dieser Schenkel 45 zusammen mit dem Zwischenstück 43 und dem Schenkel 42 ein U und der andere Schenkel 46 zusammen mit dem Zwischenstück 43 und dem Schenkel 42 ein Z bildet. Auf diesen, durch die Schenkel 44, 45, 46 gebildeten Abschnitt des Basisteils 41 wird die in den Figuren 8, 9 dargestellte Metallplatte 50 aufgesteckt.

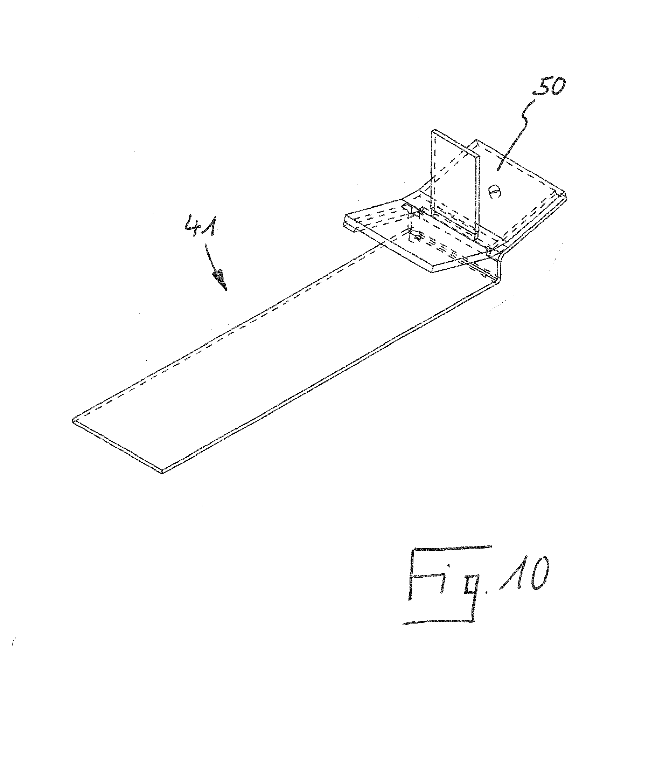

Die Metallplatte 50 weist eine im wesentlichen rinnenförmige Struktur mit einem Mittelteil 51 und von diesem abknickenden äußeren Abschnitten 52, 53 auf. Das Mittelteil 51 weist einen Schlitz 54 auf, der in seinen Dimensionen mit dem Schenkel 44 des Basisteils 41 korrespondiert, so dass die Metallplatte 50 unter Durchgreifung des Schlitzes 54 durch den Schenkel 44 auf das Basisteil 41 aufsteckbar ist, bis die Abschnitte 52, 53 der Metallplatte 50 auf den nach außen abgewinkelten Schenkeln 45, 46 des Basisteils 41 aufliegen. Dieser Zustand ist in Figur 10 dargestellt.

In dieser Konfektionierung bieten die Abschnitte 52, 53 der Metallplatte 50 Auflagen für Unterkanten benachbarter Solarmodule 1, wobei gleichzeitig der Schenkel 44 einen Anschlag für beide Unterkanten darstellt. Die Abschnitte 52, 53 der Metallplatte 50 weisen ferner Öffnungen 55, 56 auf, durch die Elemente 47, 48 auf die Abschnitte 52, 53 der Metallplatte 50 aufschraubbar sind. Diese Elemente 47, 48 sind im wesentlichen ausgebildet wie das Element 24 des oberen Aufstellers 20 des Aufstellsystems nach dem ersten Ausführungsbeispiel. Entsprechend sind die den Unterkanten 2 der auf den von den Abschnitten 52, 53 der Metallplatte 50 gebildeten Auflagen aufliegenden Solarmodule benachbarten Abschnitte der Seitenkanten 3, 5 durch die von den Elementen 47, 48 gebildeten Haltemittel halterbar.

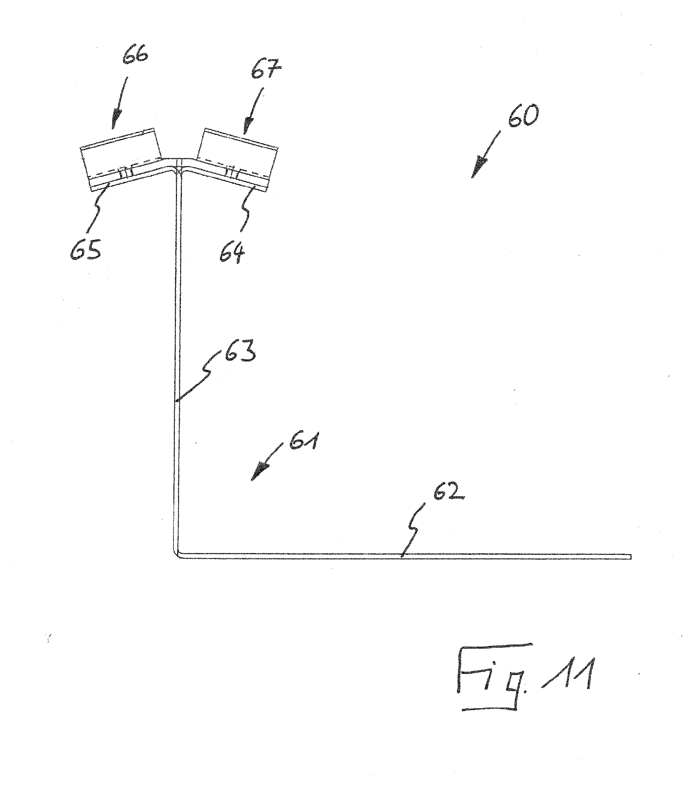

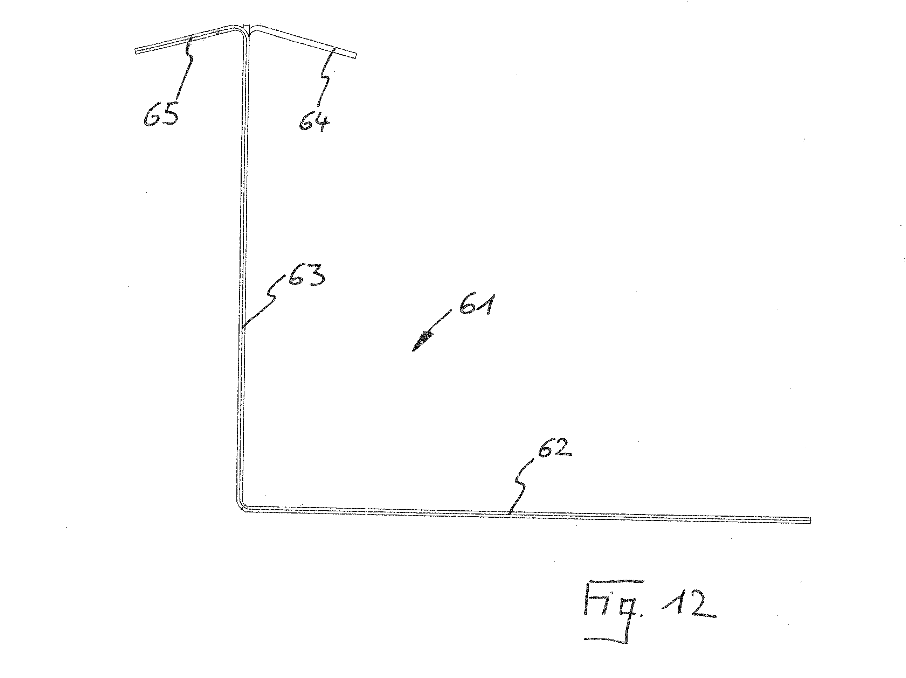

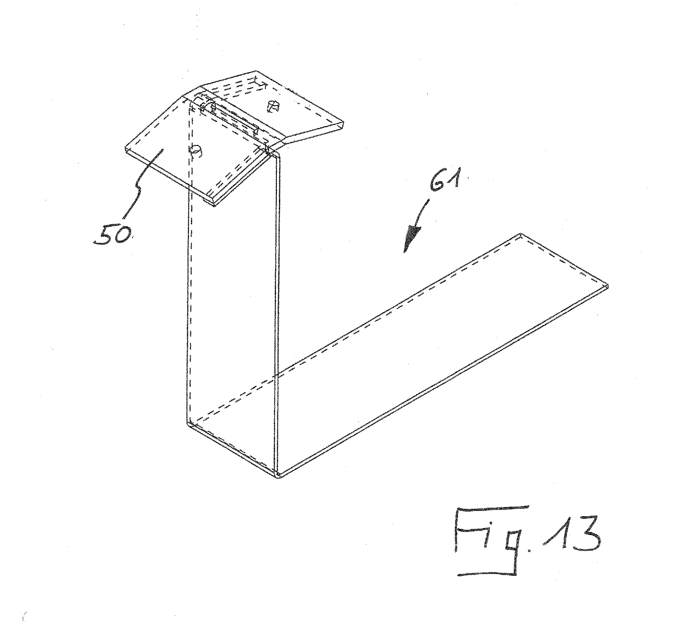

Figur 11 zeigt einen oberen Aufsteller 60 der oberen Aufsteller des zweiten Ausführungsbeispiels des erfindungsgemäßen Aufstellsystems. Der obere Aufsteller 60 umfasst ein Basisteil 61, das in Figur 12 dargestellt ist. Das Basisteil 61 ist aus einem Flachstahl ausgeformt und weist einen ersten äußeren Schenkel 62 auf, der auf einem Untergrund auflegbar ist, und an den sich ein abgewinkeltes Zwischenstück 63 anschließt, das sich bei Auflage des äußeren Schenkels 62 auf einem Untergrund vertikal nach oben erstreckt. Der sich an das Zwischenstück 63 anschließende Abschnitt des Basisteils 61 weist zwei nach außen entgegengesetzt abgewinkelte Schenkel 64, 65 auf. Einer dieser Schenkel 64 bildet zusammen mit dem Zwischenstück 63 und ersten äußeren Schenkels 62 im wesentlichen die Formen eines U, während der zweite Schenkel 65 zusammen mit dem Zwischenstück 63 und dem ersten äußeren Schenkel 62 im wesentlichen die Form eines Z bildet. Auf diese Schenkel 64, 65 ist die Metallplatte 50 auflegbar. Der Zustand mit einer auf das Basisteil 61 aufgelegten Metallplatte 50 ist in Figur 13 dargestellt. Wie zum unteren Aufsteller zuvor erläutert, können auch im Fall des oberen Aufstellers 60 auf die Metallplatte 50 Elemente 66, 67 aufgeschraubt werden, die jeweils wie das Element 24 des oberen Aufstellers gemäß dem ersten Ausführungsbeispiel des erfindungsgemäßen Aufstellsystems ausgebildet sein können. Dabei bilden die Abschnitte 52, 53 der Metallplatte 50 jeweils eine Auflage für Seitenkanten 3, 5 eines Solarmodules 1 an einem zur Oberkante 4 benachbarten Bereich, während die Elemente 66, 67 Anschlag- und Haltemittel für die Seitenkanten 3, 5 bilden.

In der in Figur 11 dargestellten Konfektionierung bieten die Abschnitte 52, 53 der Metallplatte 50 Auflagen für Seitenkanten 3, 5 benachbarter Solarmodule 1, wobei gleichzeitig die Elemente 66, 67 Anschlag- und Haltemittel für diese Seitenkanten 3, 5 bilden.

Während die äußeren Schenkel 45, 46 des Basisteils 41 des unteren Aufstellers 40 leicht nach oben abgewinkelt sind, sind die äußeren Schenkel 64, 65 des Basisteils 61 de oberen Aufstellers 60 leicht nach oben abgewinkelt. Der Knickwinkel entspricht dabei dem Knickwinkel, mit dem die Abschnitte 52, 53 der Metallplatte 50 vom Mittelteil 51 abgewinkelt sind, so dass die Metallplatte mit nach oben abgeknickten Abschnitten 52, 53 flächig auf die äußeren Schenkel 45, 46 des Basisteils 41 und mit nach unten abgeknickten Abschnitten 52, 53 flächig auf die äußeren Schenkel 64, 65 des Basisteils 61 auflegbar ist. Die nach oben weisenden Flächen der Abschnitte 52, 53, die die Auflagen für die Unterbeziehungsweise Seitenkanten 2, 3, 5 des Solarmodules 1 bilden, erstrecken sich dabei in der Ebene der Erstreckung des Solarmodules 1 bei dessen Aufliegen auf den Auflagen.

## Patentansprüche

1. Aufstellsystem zur schrägen Aufstellung eines tafelförmigen Solarmodules (1) mit einer rechteckigen, von vier Außenkanten (2, 3, 4, 5) gebildeten Außenkontur auf einem Untergrund, wobei das Solarmodul (1) derart schräg aufstellbar ist, dass eine erste der vier Außenkanten eine horizontal verlaufende Unterkante (2), eine zweite der vier Außenkanten eine horizontal verlaufende, höher als die Unterkante (2) verlaufende Oberkante (4) und die zwei weiteren Seitenkanten (3, 5) schräg von der Oberkante (4) zur Unterkante (2) abfallende Seitenkanten (3, 5) bilden, mit folgenden Merkmalen:
1.1 Einer Anzahl von einzelnen Aufstellern (10, 20; 40, 60) zur Aufstellung des Solarmodules (1) auf dem Untergrund;
1.2 eine Anzahl der Aufsteller (10; 40) weist jeweils
1.2.1 eine Auflage (11; 52, 53) auf, auf die das Solarmodul (1) im Bereich seiner Unterkante (2) oder Seitenkanten (3, 5) in einer ersten Höhe (H1) auflegbar ist,
1.2.2 einen Anschlag (12; 44) auf, gegen den das Solarmodul (1) bei Aufliegen auf der Auflage (11; 52, 53) schwerkraftbedingt mit seiner Unterkante (2) anschlägt, und
1.2.3 ein Haltemittel (13; 23) auf, durch das das Solarmodul (1) bei Aufliegen auf der Auflage (11; 52, 553) und Anschlagen gegen den Anschlag (12; 44) an dem jeweiligen Aufsteller (10; 40) halterbar ist;
1.3 eine Anzahl der Aufsteller (20; 60) weist jeweils
1.3.1 eine Auflage (21; 52, 53) auf, auf die das Solarmodul (1) im Bereich seiner Oberkante (4) oder Seitenkanten (3, 5) in einer zweiten Höhe (H2) auflegbar ist,
1.3.2 einen Anschlag (22) auf, gegen den das Solarmodul (1) bei Auflegen auf der Auflage (21; 52, 53) mit einer Seitenkante(3, 5) führbar ist, und
1.3.3 ein Haltemittel (23) auf, durch das das Solarmodul (1) bei Aufliegen auf der Auflage (21; 52, 53) und Anschlagen gegen den Anschlag (22) an dem jeweiligen Aufsteller (20; 60) halterbar ist; wobei
1.4 die erste Höhe (H1) in einer geringeren Höhe als die zweite Höhe (H2) verläuft.

2. Aufstellsystem nach Anspruch 1, bei dem wenigstens einer der Aufsteller (10, 20; 40, 60) ein Basisteil (15, 26; 41, 61) aufweist, an dem wenigstens eines der folgenden Elemente der Aufsteller angeordnet ist: wenigstens eine Auflage (11, 21, 52, 53), wenigstens ein Anschlag (12, 22, 44) oder wenigstens ein Haltemittel (13, 23).

3. Aufstellsystem nach Anspruch 2 mit einem Basisteil (15, 26; 41, 61) aus Flachstahl.

4. Aufstellsystem nach wenigstens einem der vorhergehenden Ansprüche, bei dem wenigstens ein Haltemittel (13, 23) derart ausgebildet ist, dass das Solarmodul (1) durch das Haltemittel (13, 23) kraftschlüssig am Aufsteller (10, 20; 40, 60) halterbar ist.

5. Aufstellsystem nach wenigstens einem der vorhergehenden Ansprüche, bei dem das Haltemittel (13,23) unter Umgreifung der Unter- oder Seitenkante (2, 3, 5) des Solarmodules (1) gegen den Aufsteller (10, 20; 40, 60) schraubbar ist.

6. Tafelförmiges Solarmodul (1) mit einer rechteckigen, von vier Außenkanten (2, 3, 4, 5) gebildeten Außenkontur und mit einem Aufstellsystem (30) zur schrägen Aufstellung des Solarmodules (1) auf einem Untergrund, wobei das Solarmodul (1) derart schräg aufstellbar ist, dass eine erste der vier Außenkanten (2, 3, 4, 5) eine horizontal verlaufende Unterkante (2), eine zweite der vier Außenkanten (2, 3, 4, 5) eine horizontal verlaufende, höher als die Unterkante (2) verlaufende Oberkante (4) und die zwei weiteren Seitenkanten (3, 5) schräg von der Oberkante (4) zur Unterkante (2) abfallende Seitenkanten (3, 5) bilden, mit folgenden Merkmalen:
6.1 Einer Anzahl von einzelnen Aufstellern (10, 20; 40, 60) zur Aufstellung des Solarmodules (1) auf dem Untergrund;
6.2 eine Anzahl der Aufsteller (10; 40) weist jeweils
6.2.1 eine Auflage (11; 52, 53) auf, auf die das Solarmodul (1) im Bereich seiner Unterkante (2) oder Seitenkanten (3, 5) in einer ersten Höhe (H1) aufliegt,
6.2.2 einen Anschlag (12; 44) auf, gegen den das Solarmodul (1) schwerkraftbedingt mit seiner Unterkante (2) anschlägt, und
6.2.3 ein Haltemittel (13; 23) auf, durch das das Solarmodul (1) an dem jeweiligen Aufsteller (10; 40) gehalten ist;
6.3 eine Anzahl der Aufsteller (20; 60) weist jeweils
6.3.1 eine Auflage (21; 52, 53) auf, auf die das Solarmodul (1) im Bereich seiner Oberkante (4) oder Seitenkanten (3, 5) in einer zweiten Höhe (H1) aufliegt,
6.3.2 einen Anschlag (22) auf, gegen den das Solarmodul (1) geführt ist, und
6.3.3 ein Haltemittel (23) auf, durch das das Solarmodul (1) an dem jeweiligen Aufsteller (20; 60) gehalten ist; wobei
6.4 die erste Höhe (H1) in einer geringeren Höhe als die zweite Höhe (H2) verläuft.
